# EUROPEAN PATENT APPLICATION

(11) **EP 2 179 663 A1**
(43) Date of publication of application: **28.04.2010**
(21) Application number: 08805314.5
(22) Date of filing: 09.07.2008
(51) Int. Cl.: A23L 1/36, A23G 3/48

(54) **CONTINUOUS METHOD FOR MANUFACTURE OF FOOD PRODUCTS**

(30) Priority: 11.07.2007 ES 200701944
(71) Applicant: La Morella Nuts, S.A., 43206 Reus (Tarragona) (ES)
(72) Inventor: BARRIACH SUGRAÑES, Joaquim, Maria, E-43392 Castellvell Del Camp (Tarragona) (ES); RAMIREZ MARCO, Bartolome, E-43007 Tarragona (ES); GOMBAU MARGALEF, Joan, E-43730 Falset (Tarragona) (ES); REGUANT MIRANDA, Jordi, E-43204 Reus (Tarragona) (ES); SANS BONILLO, Oscar, E-43202 Reus (Tarragona) (ES); VENTURA HERNANDEZ, Xavier, E-43204 Reus (Tarragona) (ES)
(74) Representative: Carpintero Lopez, Francisco
(86) International application number: PCT/ES2008/000484
(87) International publication number: WO 2009/007483

(57) **Abstract**

Continuous food products manufacturing method, based on fruits (1) and sugar (2), which consists of mixing the fruits (1) and the sugar (2) while heating in automatic mixing and heating means (3) until obtaining a mixture with homogeneous morphology and temperature, cooling the mixture obtained in automatic cooling means (4), chopping the mixture obtained and sifting it in automatic sifting means (5), and controlling the granulometry of said chopped mixture.

## Description

### OBJECT OF THE INVENTION

The present invention relates to a continuous food products manufacturing method, applicable within the food industry, and more specifically for obtaining confectionery products, such as for example pastry, confectionery, chocolate and cereal-based products, such as for example muesli, through a continuous method that allows high productivity.

### BACKGROUND OF THE INVENTION

At present, production processes are known to exist for manufacturing or obtaining confectionery products, such as almond toffee or crocanti, based on traditional or artisan systems and means which are fundamentally carried out manually, which only allows very limited production levels.

The main drawback of said artisan production is that it is slow and therefore entails low production capacity, although it does avoid another series of problems and drawbacks that normally arise in continuous manufacturing, as the artisan, or discontinuous, process allows storage of the intermediate product obtained in each stage of the process, due to which said intermediate product may be left for a certain period of time between each of the operations.

On the other hand, as mentioned earlier, the continuous manufacturing of these types of products entails a series of problems, among which we must mention the drawbacks caused by insufficient product cooling time.

In continuous processes, during cooling, if the product is distributed in boxes for cooling thereof, rapid cooling is not achieved, due to which overheating occurs in the centre of the product mass, causing it to become compacted and stale, thereby reducing the quality of the final product obtained.

On the contrary, the use of processes which allow rapid cooling of the product prevents it from becoming compacted and a more homogeneous and stable product is obtained, also avoiding a high number of losses as a consequence of the system or production process itself.

In this regard, there are devices that allow the continuous or semi-continuous production of products similar to almond toffee or crocanti, which consist of stages that are often complex and costly and do not achieve the quality levels of artisan production.

One of the devices mentioned in the preceding paragraph is described in United States Patent number US 3,584,585, which relates to a device for manufacturing crocanti, among other applications. This device includes a first element for treating and dosing the raw material, another element for melting the sugar and, finally, a device for cooling and obtaining the final product.

On the other hand, Swiss Patent number CH 608343 describes the manufacture of confectionery products, other than crocanti, although it envisages the possibility of adding nuts and dried fruits and sugar to said products. Said document describes the preparation of confectionery products in pieces which are coated, such as nuts and dried fruits, more specifically caramel-coated almonds. The document describes the use of a spinning rotating drum where the coating is carried out through spraying, specifying that the granulometry of the finally obtained product is comprised within the range of 0.35 mm and 2 mm.

### DESCRIPTION OF THE INVENTION

The present invention relates to a continuous food products manufacturing method, preferably for obtaining crocanti and/or almond toffee, i.e. food products based on chopped nuts and dried fruits, wherein a granular structure with a partial coating of sugar is obtained, in the case of crocanti, or completely caramelised as in the case of almond toffee.

The possibility that the food product may contain cereals, preferably extruded, is envisaged, such as for example rice, corn or wheat, in addition to soy, broad beans or cocoa nibs and/or desiccated fruit, in addition to any food that resists up to 200ºC and has a low water content, for example of up to 10% by mass.

The method proposed by the invention is based on fruits and sugar as raw materials, said fruits being, preferably, chopped until obtaining a granular structure.

In practice, said fruits and sugar may be found stored in independent silos, or any other type of housing container.

In accordance with the invention, the method firstly comprises a stage a) wherein the fruits and sugar are mixed while heated using automatic mixing and heating means, until obtaining a mixture or molasses with homogeneous morphology or temperature, i.e. until achieving an adequate or correct impregnation of all the ingredients or raw materials, for which the possibility of mixing the nuts and dried fruits with the sugar through a combined effect of stirring and heating is envisaged, using for such purpose a plurality of conveniently heated rotating drums wherein the fruits and sugar are introduced, also in adequate proportions, with the collaboration of any type of appropriate means of transport such as a transporter.

Next, the method comprises a stage b) wherein the mixture obtained in stage a) is cooled in automatic cooling means.

Immediately afterwards, in a stage c) the mixture obtained in stage b) is chopped and, finally, in a stage d) the product mixture chopped in stage c) is sifted in automatic sifting means, controlling the granulometry of said chopped mixture.

The possibility that the method may include a stage e), after completing stage d), is envisaged, wherein the sifted mixture is packaged in automatic packaging means in order to obtain a final food product.

Likewise, the possibility that the automatic mixing and heating means used in stage a) may consist of a plurality of rotating devices, such as tumblers or drums, configured to mix and heat the fruits and sugar, is envisaged. Preferably, the rotating devices used in stage a) are disposed or installed at an angle.

A predetermined amount of sugar is automatically introduced into each of the rotating drums or tumblers. These rotating tumblers are equipped with heating means in order to achieve the adequate temperature of the product, for the ultimate purpose of achieving perfect thermal uniformity of the product and maintaining it in granular form.

The heating means disposed on these rotating drums or tumblers have a calorific value that depends on tumbler or drum capacity, the area of application of which on the tumbler depends not only on the size of the tumbler, but also on its tilt angle and work speed.

In this manner, it is envisaged that each rotating device used in stage a) shall be comprised of an axis configured to mix fruits and sugar having a tilted orientation with respect to a direction parallel to the direction along which a gravitational force acts, i.e. the rotation axis is tilted or displaced with respect to the vertical.

The possibility that each rotating device used in stage a) may comprise a plurality of blades disposed inside said rotating device is envisaged, said blades being configured to mix fruits and sugar.

Likewise, it is envisaged that the rotating devices used in stage a) may be configured to move, or pour, the fruit and sugar mixture directly into the automatic cooling means, by means of any mechanical system or by free fall due to the effect of gravitational force.

Preferably, stage b) consists of cooling the mixture obtained in stage a) during a time interval of 2 to 20 minutes, while the temperature of the mixture obtained in cooling stage b) shall preferably be within the range of 0ºC and 50ºC.

The possibility that stage b) may consist of cooling the mixture obtained in stage a) through the forced movement of said mixture is envisaged.

Likewise, stage c) may consist of obtaining granules, after chopping the mixture, the size of said granules ranging between 1 mm and 9 mm.

Preferably, the sugar used is selected from among sucrose, fructose, glucose, lactose and combinations of these, and the sugar content used to obtain a final product mass ranges between 10% and 100% by weight of said final mass.

The possibility that in stage a) the sugar may reach a homogenisation temperature ranging between 50ºC and 200ºC is envisaged. Once the sugar has been homogenised at the desired temperature, between 50ºC and 200ºC, the nuts and dried fruits or any other of the aforementioned ingredients are added. The time, temperature and proportion between the sugar and the fruits is determined based on the desired characteristics of the final product.

Once the sugar has conveniently adhered to and impregnated the granulated nuts and dried fruits and the resulting product has reached the adequate temperature, said product is subject to the cooling stage, at which time the rotating tumblers are ready to repeat a new work cycle.

As mentioned in the preceding paragraphs, the fruit is selected from among nuts and dried fruits such as sesame, edible seeds such as sunflower and pumpkin seeds, hazelnuts, almonds, walnuts, peanuts, pistachio nuts, pine nuts, macadamia nuts, pecan nuts, raisins, broad beans or cocoa nibs, cashew nuts, chestnuts, desiccated fruit, soy, soy derivatives and cereals, preferably extruded, such as for example extruded rice, corn or wheat.

Finally, the possibility that the method of the invention may include a Programmable Logic Controller (PLC), consisting of electronic means configured to automate industrial processes, is envisaged, said Programmable Logic Controller being configured to automate all the stages of the method and fully control production.

The rotating tumblers are programmed gradually over time and, in the event that a series of said tumblers are disposed, multiple sequential tasks are obtained via continuous product output.

In the case of continuous manufacture of crocanti, the possibility that the cooling stage may also be carried out with product mobility, i.e. with stirring, of the product for the purpose of avoiding compacting thereof, using a cooling system or means for such purpose.

Cooling duration is very important as more than just superficial cooling is required, due to the fact that resident heat could migrate outwards, reheating the sugar and causing compacting of the crocanti granules.

The temperature of the product after cooling should be below 50ºC.

Conditions have been established for said cooling to be carried out between 2 to 20 minutes. If cooling is carried out during a shorter period of time than that specified, only the crust of the product will have cooled, producing future compacting in the interior thereof. On the contrary, if cooling is carried out during a longer period of time than that previously mentioned, compacting could occur as a consequence of the cooling action itself.

Immediately afterwards, the product is transported toward a chopping, homogenisation and sifting process in order to obtain a product with a controlled size distribution, for which granule size must range, preferably, between 1 mm and 9 mm.

Nevertheless, the possibility that the product may pass directly from the cooling stage to the sifting stage has been envisaged, in such a manner that only those granules that exceed the pre-established size continue to the chopping phase or stage, in a chopping machine.

The process concludes, after the adequate sifting of the product, with the packaging thereof.

The optimal use of production without product losses, as occurs in currently used methods, in the method proposed by the invention must be pointed out. Production control may be automated by including a Programmable Logic Controller or a computer through which the necessary operations for said process are automated.

Finally, it must be mentioned that the geometric shape of the drums or tumblers may be similar to that of a tank, wherein its axis is tilted with respect to the vertical and the product remains inside the tank, offering a maximum surface in contact with the air. The burners disposed underneath said drum offer maximum performance on being in contact with a greater surface area of the product to be heated, thereby ensuring that maximum energetic contribution per kilogramme of product obtained, minimising energy losses.

### DESCRIPTION OF THE DRAWINGS

For the purpose of complementing this description and helping to better understand the characteristics of the invention, in accordance with a preferred example of practical embodiment thereof, a single sheet of drawings has been included as an integral part of this description, wherein a block diagram corresponding to the continuous food products manufacturing method that is the object of this invention has been represented in an illustrative and non-limitative manner, in addition to the elements that comprise said method.

### PREFERRED EMBODIMENT OF THE INVENTION

In light of the aforementioned figures, we can observe that in one of the possible embodiments of the invention, the continuous food products manufacturing method, and more specifically for manufacturing hazelnut crocanti, is based on fruits (1), which are hazelnuts, and sugar (2) in a 50-50 proportion.

The method is comprised of a stage a) that consists of mixing the fruits (1) and the sugar (2), while heating in automatic mixing and heating means (3), comprised of a plurality of rotating devices disposed at an angle which are configured to mix and heat the fruits (1) and sugar (2), until obtaining a mixture with homogeneous morphology and temperature.

Stage a) consists of reaching a sugar (2) homogenisation temperature ranging between 50ºC and 200ºC.

Each rotating device used in stage a) comprises an axis configured to mix fruits (1) and sugar (2) having a tilted orientation with respect to a direction parallel to the direction along which a gravitational force acts, the energy consumption of which ranges between 50 and 3,000 kcal/kg of manufactured product.

Additionally, each rotating device comprises a plurality of blades disposed inside said rotating device, said blades being configured to mix fruits (1) and sugar (2).

Immediately afterwards, the method comprises a stage b) which consists of cooling, through a forced movement, the mixture obtained in stage a) in automatic cooling means (4), until reaching a temperature between 0ºC and 50ºC and during a time interval of 2 to 20 minutes, after which it comprises a stage c) wherein the mixture obtained in stage b) is chopped until obtaining granules of a size ranging between 1 mm and 9 mm.

The rotating devices used in stage a) are configured to move the mixture of fruits (1) and sugar (2) directly towards the automatic cooling means (4).

Next, the method comprises a stage d) that consists of sifting the mixture chopped in stage c) in automatic sifting means (5) and controlling the granulometry of said chopped mixture.

After stage d), the method comprises a stage e) that consists of packaging the sifted mixture in automatic packaging means (6) in order to obtain a final food product.

The method of the invention includes a Programmable Logic Controller configured to automate all the stages of the method and fully control production.

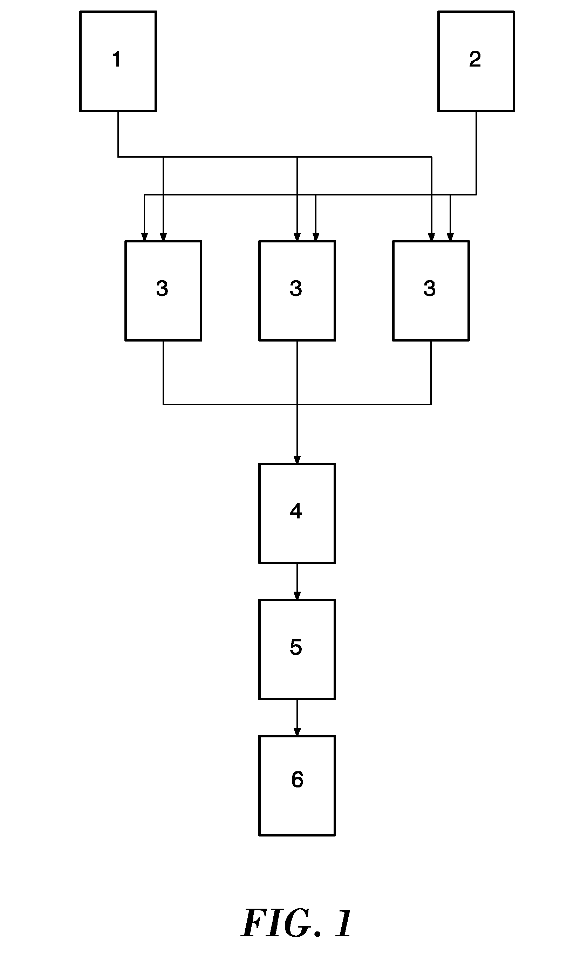

## Claims

1. Continuous food products manufacturing method, based on fruits (1) and sugar (2), **characterised in that** it comprises the following stages:
a) mix fruits (1) and sugar (2) while heating in automatic mixing and heating means (3) until obtaining a mixture with homogeneous morphology and temperature;
b) cool the mixture obtained in stage a) in automatic cooling means (4);
c) chop the mixture obtained in stage b); and
d) sift the chopped mixture obtained in stage c) in automatic sifting means (5) and control the granulometry of said chopped mixture.

2. Method, according to claim 1, **characterised in that** after stage d) it comprises a stage e) that comprises packaging the sifted mixture in automatic packaging means (6) in order to obtain a final food product.

3. Method, according to any of claims 1 and 2, **characterised in that** the automatic mixing and heating means (3) used in stage a) consist of a plurality of rotating devices configured to mix and heat the fruits (1) and sugar (2).

4. Method, according to claim 3, **characterised in that** the rotating devices used in stage a) are disposed at an angle.

5. Method, according to any of claims 3 and 4, **characterised in that** each rotating device used in stage a) comprises an axis configured to mix fruits (1) and sugar (2) having a tilted orientation with respect to a direction parallel to the direction along which a gravitational force acts.

6. Method, according to any of claims 3 to 5, **characterised in that** each rotating device used in stage a) comprises a plurality of blades disposed inside said rotating device, said blades being configured to mix fruits (1) and sugar (2).

7. Method, according to any of claims 3 to 6, **characterised in that** the rotating devices used in stage a) are configured to move the mixture of fruits (1) and sugar (2) directly towards the automatic cooling means (4).

8. Method, according to any of the preceding claims, **characterised in that** stage b) consists of cooling the mixture obtained in stage a) during a time interval of 2 to 20 minutes.

9. Method, according to any of the preceding claims, **characterised in that** the temperature of the mixture obtained in stage b) is between 0ºC and 50ºC.

10. Method, according to any of the preceding claims, **characterised in that** stage b) consists of cooling the mixture obtained in stage a) through the forced movement of said mixture.

11. Method, according to any of the preceding claims, **characterised in that** stage c) consists of obtaining granules, after chopping the mixture, the size of said granules being comprised between 1 mm and 9 mm.

12. Method, according to any of the preceding claims, **characterised in that** the sugar (2) used is selected from among sucrose, fructose, glucose, lactose and combinations of these.

13. Method, according to any of the preceding claims, **characterised in that** the sugar (2) content used to obtain a final product mass ranges between 10% and 100% by weight of said final mass.

14. Method, according to any of the preceding claims, **characterised in that** stage a) consists of reaching a sugar (2) homogenisation temperature that ranges between 50ºC and 200ºC.

15. Method, according to any of the preceding claims, **characterised in that** the fruit (1) is selected from among sesame, sunflower seeds, pumpkin seeds, hazelnuts, almonds, walnuts, peanuts, pistachio nuts, pine nuts, macadamia nuts, pecan nuts, raisins, broad beans, cocoa nibs, cashew nuts, chestnuts, desiccated fruit, soy, soy derivatives and extruded cereals and rice.

16. Method, according to any of the preceding claims, **characterised in that** it comprises a Programmable Logic Controller configured to automate all the stages of the method and fully control production.
